# EUROPEAN PATENT APPLICATION

(11) **EP 4 406 918 A1**
(43) Date of publication of application: **31.07.2024**
(21) Application number: 24153882.6
(22) Date of filing: 25.01.2024
(51) Int. Cl.: C02F 1/00, C02F 1/44, C02F 103/02

(54) **WATER USE REDUCTION SYSTEM FOR HEAT REJECTION SYSTEMS USING NANO-FILTRATION**

(30) Priority: 25.01.2023 US 202363481590 P
(71) Applicant: SPX Cooling Technologies, Inc., Overland Park, KS 62213 (US)
(72) Inventor: MORTENSEN, Kenneth, Springs, KS (US); EVANS, Joseph, Kansas City, MO (US); BAKER, Jim, Dayton, OH (US)
(74) Representative: Viering, Jentschura & Partner mbB Patent- und Rechtsanwälte

(57) **Abstract**

A pre-treatment make-up water system and method are provided. The system includes a make-up water line for providing an incoming water source, a nano-filtration system designed to filter the incoming water source, a heat rejection system designed to use the filtered incoming water source as a coolant, and a bypass line in fluid communication with the make-up water line and the heat rejection system, the bypass line designed to supply the incoming water source to the heat rejection system, wherein a tie-in for the bypass line is provided upstream of the nano-filtration system. The system can further include a controller communicatively coupled to one or more components of the system for monitoring and controlling one or more valves, probes, and sensors.

## Description

### CROSS-REFERENCE TO RELATED APPLICATIONS

This application claims the benefit of U.S. Provisional Patent Application No. 63/481,590, filed January 25, 2023, entitled WATER USE REDUCTION SYSTEM FOR HEAT REJECTION SYSTEMS USING NANO-FILTRATION, the entire contents of which are incorporated herein by reference.

### TECHNICAL FIELD

The present disclosure generally describes nano-filtration methods and systems relating to the pre-treatment of make-up water for heat rejection systems.

### BACKGROUND

Heat rejection systems can be used in industrial, commercial, and residential settings to provide cooling. Some common heat rejection systems can include air conditioning systems, refrigeration units, cooling towers, evaporative coolers, fluid coolers, adiabatic coolers, and other known coolers in the art. Further, heat rejection systems can use a coolant fluid like water to improve heat transfer. In some instances, the coolant fluid can be used in an open loop heat rejection system. In an open loop heat rejection system, the coolant fluid is delivered to the heat rejection system, circulated through the system once or multiple times, and discharged to waste or other downstream systems. Thus, the coolant fluid may need to be replenished in an open loop heat rejection system due to evaporation or discharge of the coolant fluid from the heat rejection system.

For example, in a cooling tower system, make-up water can be delivered to the cooling tower system to replenish the evaporated or discharged water. To conserve water, the water can be cycled through the system. However, some water is lost to evaporation. The evaporation provides the necessary cooling but results in a decrease in the volume of the water in the system. Thus, as the pure water evaporates, a concentration of minerals and contaminants, such as salts, organic matter, particulates, etc., can build up in the remaining water. These contaminants can reduce the performance of the system by causing scaling, fouling, and corrosion in the heat rejection system. However, some of the contaminants can be removed from the heat rejection system by a process called blow-down, where the cycled water is discharged or drained from the heat rejection system. Thus, fresh make-up water can be added to the system to maintain the proper volume of water for effective cooling. Further, the fresh make-up water can dilute the remaining contaminants.

Some conventional sources of make-up water can include water provided by a city's municipal water supply, holding tanks, and natural sources such as rivers, wells, and aquifers. As such, the quality of the make-up water can vary depending on the make-up water source and the geographic location of the system. For example, some sources of water have a high salt content. Accordingly, the quality of the make-up water can impact the efficiency and operating costs of the cooling tower because more make-up water may need to be added to the system to maintain a desirable water quality of the cooling water circulating in the heat rejection system.

However, it can also be beneficial to minimize the unit's overall water use, particularly in regions where water costs are high and/or the water supply is scarce. Thus, the water use efficiency of the heat rejection system can be measured by the cycles of concentration (COC), where COC is defined as a ratio of the solids concentration of the circulating water in the system to the solids concentration of the fresh make-up water being introduced into the system. The less make-up water that is introduced into the system, the higher the COC. High COC can result in water savings but may also result in a higher concentration of minerals and contaminants in the heat rejection system.

One approach to improving make-up water quality is to filter the make-up water using a water purifying system such as a reverse osmosis (RO) system or a de-ionizing treatment system. For example, RO and de-ionizing systems can deliver water at a high purity level. However, high-purity level water may not be necessary or desired for heat rejection applications. On the other hand, traditional water softening substitutes one species of salt in the water for another. However, softened water can lead to an elevated risk of corrosion because the softened water can have a lower buffering capacity as compared to non-softened water. Moreover, the flow of make-up water to the heat rejection system can be interrupted if the water purification system becomes fouled or is not operational. If the flow of make-up water is unable to reach the heat rejection system, the heat rejection system can run dry, thereby causing a loss in efficiency or system failure.

Another approach to improving make-up water quality and/or water quality in the heat rejection system is the use of water treatment chemistries. For example, water treatment chemistries such as coagulants and flocculants can be used to help remove or control dissolved or suspended solids in the cooling water and/or make-up water. However, water treatment chemistries can be expensive, difficult to dose, and may not be appropriate for all heat rejection systems or applications. Moreover, to help maintain a defined water chemistry in the system, a blow-down process to remove water from the system may be used. Thus, through this blow-down process, excessive water may be removed from the system, which can require an increased addition of make-up water.

Therefore, there is a need for a heat rejection system, including a water purification system for filtering make-up water that can optimize water use and operation cost and ensure that a flow of make-up water is maintained at a desired flow rate.

### SUMMARY

In accordance with some embodiments of the present disclosure, systems, and methods for purifying make-up water through the use of a nano-filtration system are provided. The system and method provide for the ability to economically purify make-up water and, in particular, overcome the shortcomings related to traditional RO and de-ionization filtration systems.

In accordance with one instance, an automated pre-treatment make-up water system is disclosed. The system includes a make-up water line for supplying an incoming water source to a pre-filter designed to pre-filter the incoming water source, the make-up water line having a first control valve, a nano-filtration system designed to further filter the pre-filtered water, the nano-filtration system having a second control valve and disposed downstream of the pre-filter, a bypass line for transporting at least a portion of the incoming water source to a heat rejection system, the bypass line having a third control valve and being positioned upstream of the nano-filtration system and in fluid communication with the make-up water line, wherein the heat rejection system is designed to use water supplied from the bypass line and the nano-filtration system as coolant, and a controller. The controller is in communication with the make-up water line, the nano-filtration system, and the bypass line. The controller includes a receiver designed to receive at least one of water quality parameter, a flow rate, or a pressure from at least one of the make-up water line, the nano-filtration system, or the bypass line, a processor designed to analyze the at least one water quality parameter, and a transmitter designed to transmit instructions based on at least one water quality parameter to at least one of the first control valve, the second control valve, or the third control valve to control a supply flow rate of water supplied to the heat rejection system.

In one instance, the pre-treatment make-up water system further includes a pre-filter provided downstream of the incoming water source and upstream of the nano-filtration system.

In another instance, the pre-filter is downstream of the incoming water source and upstream of the tie-in for the bypass line.

In a further instance, the pre-filter is downstream of the tie-in for the bypass line and upstream of the nano-filtration system.

In another instance, the pre-filter is provided in the form of at least one of a membrane filter, a sand filter, a diatomaceous earth filter, or a cartridge filter.

In one instance, a supply water source of the heat rejection system includes water from each of the bypass line and a product water line (e.g., a permeate water line) of the nano-filtration system, and a supply water source of the heat rejection system is provided in the form of water from the bypass line.

In another instance, each of the bypass line and a product water line (e.g., a permeate water line) of the nano-filtration system are fluidly coupled to a storage tank.

In a further instance, a supply water source of the heat rejection system is water from the storage tank.

In one instance, the heat rejection system is provided in the form of at least one of a cooling tower, an evaporative cooler, an adiabatic cooler, or a fluid cooler.

In another instance, the controller is designed to open at least one of the second control valve and the third control valve when a low level relay of the heat rejection system is tripped.

In a further instance, the controller is designed to determine whether a first flow rate from the nano-filtration system is less than, equal to, or exceeds a minimum threshold flow rate value.

In an even further instance, the controller is designed to open the third control valve in response to the first flow rate being less than the minimum threshold flow rate value.

In another instance, the controller is designed to open the second control valve and the third control valve when a low level relay of the heat rejection system is tripped.

In a further instance, the controller is designed to adjust a position of at least one of the second control valve and the third control valve in response to the at least one water quality parameter of the incoming water source being less than a threshold value.

In one instance, a method for controlling a supply of pre-treated make-up water to a heat rejection system is disclosed. The pre-treated make-up water can be used as a cooling water supply in the heat rejection system. The method includes providing a pre-treatment make-up water system having a make-up water line with a first control valve designed to control a first flow rate of an incoming water source, a nano-filtration system designed to filter the incoming water source and positioned downstream of and in fluid communication with the make-up water line, an outlet permeate line having a second control valve designed to control a second flow rate of the filtered incoming water to the heat rejection system, the heat rejection system designed to use the filtered incoming water source as a coolant, and a bypass line having a third control valve designed to control a third flow rate of the incoming water source to the heat rejection system. The method further includes determining a low water level in a basin of the heat rejection system, opening the second control valve in response to the determined low water level, determining the second flow rate is below a minimum threshold make-up flow rate value, and opening the third control valve in response to determining the second flow rate is below a minimum threshold.

In another instance, the method further includes determining a water quality parameter of the water in the basin of the heat rejection system, determining whether the water quality parameter exceeds a water quality threshold value, and adjusting a valve position of at least one of the second control valve and the third control valve in response to determining the water quality parameter exceeds the water quality threshold value.

In a further instance, the third control valve is closed in response to determining the water quality parameter exceeds the water quality threshold value.

In another instance, adjusting the valve position of the third control valve includes partially closing the third control valve in response to determining the water quality parameter exceeds the water quality threshold value.

In accordance with one instance, a pre-treatment make-up water system is disclosed. The system includes a make-up water line for providing an incoming water source, a nano-filtration system designed to filter the incoming water source, a heat rejection system designed to use the filtered incoming water source as a coolant, and a bypass line in fluid communication with the make-up water line and the heat rejection system, the bypass line designed to supply the incoming water source to the heat rejection system, wherein a tie-in for the bypass line is provided upstream of the nano-filtration system.

### DESCRIPTION OF THE DRAWINGS

Examples are described with reference to the following drawing figures. The same numbers are used throughout the figures to reference features and components.
FIG. 1A is a schematic block diagram of a pre-treatment make-up water system having a nano-filtration system for use with a heat rejection system;
FIG. 1B is a schematic block diagram of a control unit of the pre-treatment make-up water system of FIG. 1A;
FIGS. 2A - 2C are block diagrams illustrating various embodiments of the nano-filtration system of the pre-treatment make-up water system of FIG. 1A;
FIG. 3 is a side elevational view of a pre-treatment make-up water system, including the nano-filtration system of FIG. 1A;
FIG. 4 is a top plan view of system of FIG. 3;
FIGS. 5 is a partial isometric view of the system of FIG. 3;
FIG. 6 illustrates a method of operating the system of FIG. 1A to supply a heat rejection system with make-up water;
FIG. 7 illustrates a method of operating the system of FIG. 1A to supply a heat rejection system with a blended supply of make-up water;
FIG. 8 illustrates a method of operating the system of FIG. 1A to supply a storage tank with a supply of make-up water;
FIG. 9 is a table showing a water use and cost comparison between exemplary heat rejection systems, including a nano-filtration system according to embodiments disclosed herein, and conventional heat rejection systems not including a nano-filtration system in six different geographical locations; and
FIG. 10 is a table showing a water use and cost comparison between exemplary heat rejection systems, including a nano-filtration system designed to supply the heat rejection systems with a supply of blended make-up water according to embodiments disclosed herein, and conventional heat rejection systems not including a nano-filtration system in six different geographical locations.

### DETAILED DESCRIPTION

Before any embodiments of the invention are explained in detail, it is to be understood that the invention is not limited in its application to the details of construction and the arrangement of components set forth in the following description or illustrated in the following drawings. The system is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," "controlled," "coupled," and "communicated" and variations thereof are used broadly and encompass both direct and indirect mountings, connections, supports, controls, and couplings. Further, "connected" and "coupled" are not restricted to physical or mechanical connections or couplings and can also include electrically and communicatively coupled configurations in addition to other forms of connections or couplings.

The following discussion is presented to enable a person skilled in the art to make and use embodiments of the system. Various modifications to the illustrated embodiments will be readily apparent to those skilled in the art, and the generic principles herein can be applied to other embodiments and applications without departing from embodiments of the system. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the system. Skilled artisans will recognize the examples provided herein have many useful alternatives and fall within the scope of embodiments of the invention.

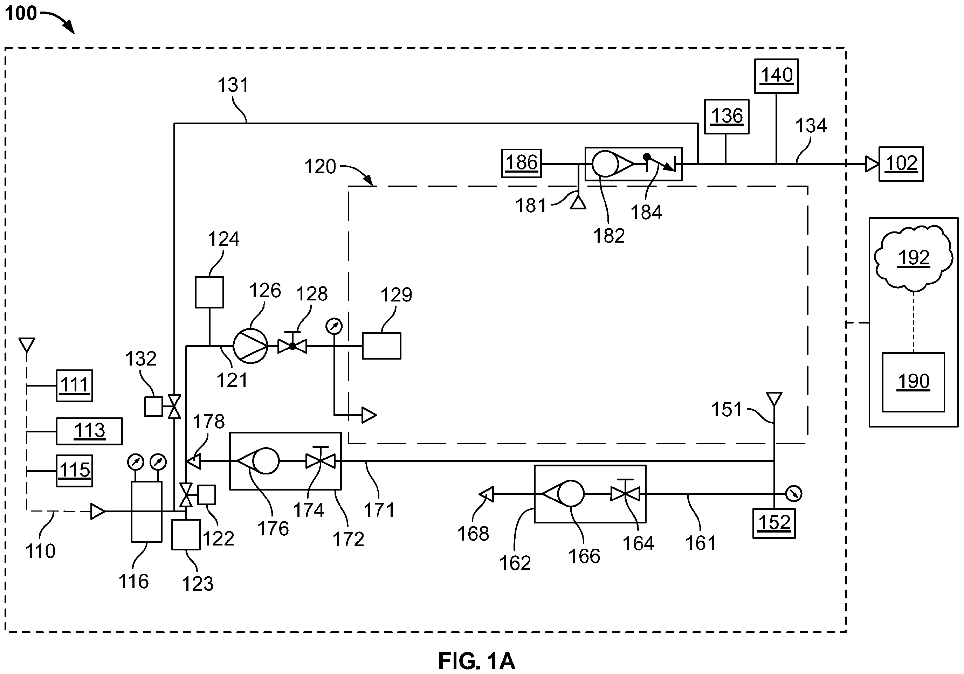

FIG. 1A is a block diagram of a (e.g., automated) pre-treatment make-up water system 100 for use with a heat rejection system 102. The heat rejection system 102 is provided in the form of a cooling tower, an evaporative cooler, an adiabatic cooler, a fluid cooler, and/or the like.

As seen in FIG. 1A, the system 100 can include a make-up water line 110 in fluid communication with a nano-filtration system (e.g., module or unit) 120 and a bypass line 131. In some embodiments, one or more probes and/or sensors may be in fluid communication with the make-up water line 110. The one or more probes can be used to measure various water quality parameters of an incoming water (e.g., make-up water) source in the make-up water line 110 and at least one probe or at least one sensor can be in electronic communication with a server 190 that may be designed to control one or more components of the system 100. For example, as shown, the make-up water line 110 can include an Oxygen-Reduction Potential (ORP) probe 111, a water totalizer 113, and a first c cell 115. The ORP probe 111 can indicate an overall water sanitation level. The water totalizer 113 can provide a measurement of the total volume of the make-up water line 110. The first c cell 115, in particular, may be communicatively coupled to the server 190. The first c cell 115 can communicate data about the incoming water source to the server 190. Although not shown, the make-up water line 110 can include additional sensors and probes such as a pH probe, a Total Dissolved Solids (TDS) probe, a chlorine probe, a conductivity sensor, a turbidity sensor, and any other water quality probe or sensor known in the art. As explained in more detail below, the measured water quality of the make-up water can be used to adjust the operational parameters of the system 100.

In some instances, the system 100 includes a pre-filter 116. As shown in one instance, the pre-filter 116 is upstream of the nano-filtration system 120 and the bypass line 131. However, in other instances, the pre-filter 116 can be downstream of the bypass line 131 and upstream of the nano-filtration system 120. The pre-filter 116 is designed to provide a first stage filtration of the incoming water source in the make-up water line 110. The pre-filter 116 can be provided in the form of a membrane filter, a sand filter, a diatomaceous earth filter, a cartridge filter, a carbon filter, or any other known filter in the art. The pre-filter 116 can be designed to remove larger contaminants from the incoming water source prior to the incoming water source entering the nano-filtration system 120 and the bypass line 131. For example, the pre-filter 116 can be a 5-micron filter. It is understood that other filter sizes may be used. By pre-filtering the incoming water source, the efficiency of the nano-filtration system 120 may be improved because the pre-filter 116 can remove larger particles that can foul the nano-filtration system 120. Although not shown, one or more probes or sensors, such as an ORP probe, a water totalizer, a pH probe, a conductivity probe, a turbidity probe, etc., can be included downstream of the pre-filter 116 to monitor the water quality of the water stream exiting the pre-filter 116. The pre-filtered water is then delivered to the nano-filtration system 120 and/or the bypass line 131.

Referring first to the pre-filtered water fed to the nano-filtration system 120, the pre-filtered water is delivered to the nano-filtration system 120 through a feed water line 121. As shown, the feed water line 121 can include various components upstream of the nano-filtration system 120. A block valve 122 can control the flow of the pre-filtered water into the nano-filtration system 120. The block valve 122 can be communicatively coupled to the server 190 via a second c cell 123. A pressure sensor 124 can be positioned downstream of the block valve 122 and upstream of the nano-filtration system 120. The pressure sensor 124 can be communicatively coupled with the second c cell 123 and designed to sense a pressure within the feed water line 121 (e.g., feed water pressure value) after the water has exited the pre-filter 116. As such, the pressure sensor 124 can be used to monitor the performance of the pre-filter 116 by sensing a pressure drop in the feed water line 121 if the pre-filter 116 becomes fouled.

A pump 126 can be provided downstream of the pressure sensor 124 and upstream of the nano-filtration system 120. The pump 126 can be designed to boost the flow rate of the pre-filtered water prior to the pre-filtered water entering the nano-filtration system 120. The feed water line 121 can further include a block valve 128 between the pump 126 and the nano-filtration system 120. The block valve 128 can be used to isolate the nano-filtration system 120 from the feed water line 121. As shown, the block valve 128 can be communicatively coupled to the server 190 via a third c cell 129.

It is to be understood that while a nano-filtration system 120 (e.g., having a single cartridge of any number of cartridges) is shown in the system 100, more than one nano-filtration system 120 can be used in conjunction with a heat rejection system, such as the heat rejection system 102. In some instances, the system 100 may include a plurality of nano-filtration systems 120 can be fluidly connected in series or can be fluidly coupled in parallel. Further, in some instances, less than all of the plurality of nano-filtration systems 120 can be operated. For example, only a single nano-filtration system 120 of a plurality of nano-filtration systems may be needed. However, multiple nano-filtration systems 120 of the plurality of nano-filtration systems can be used when a heat rejection system has a high demand for filtered make-up water. Further, it is to be understood that a plurality of nano-filtration systems 100 may be used in conjunction with a heat rejection system, such as the heat rejection system 102.

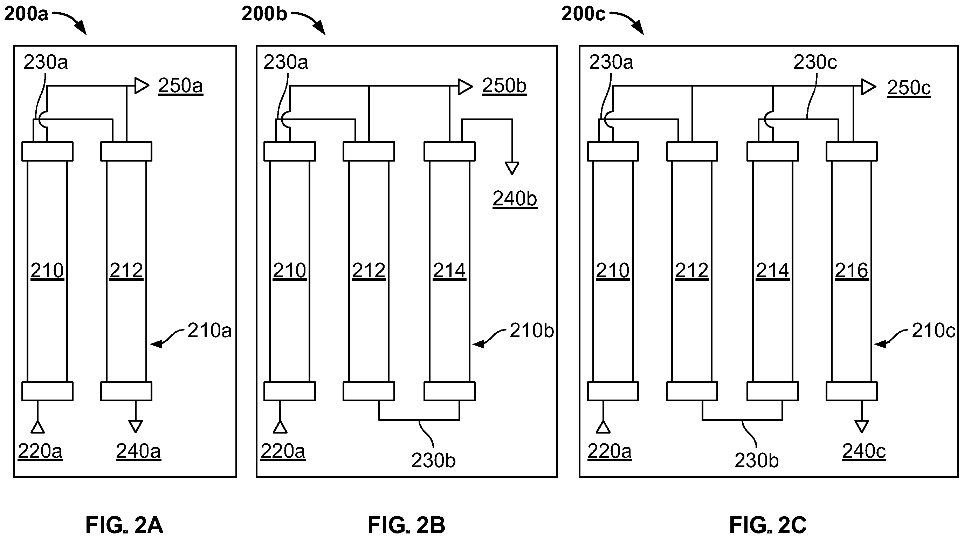

As discussed in more detail below in FIGS. 2A-2C, the nano-filtration system 120 further purifies the pre-filtered water by removing contaminants such as salts, organic material, viruses, bacteria, etc. The contaminants can be removed from the nano-filtration system 120 via a reject line 151. The reject line 151 can include a waste line 161, including a first flowmeter assembly 162. The first flowmeter assembly 162 can be designed to control the flow of the rejected water to a reject outlet 168. As shown, the first flowmeter assembly 162 includes a first (e.g., manual) valve 164 and a first rotameter 166. However, the first flowmeter assembly 162 can include any type of valve and any flowmeter known in the art. The reject outlet 168 can be connected to a waste or a collection system.

Still referring to FIG. 1A, the reject line 151 can further include a recycle line 171. A take-off for the recycle line 171 can be upstream of the waste line 161. As shown, the recycle line 171 includes a second flowmeter assembly 172. Similar to the first flowmeter assembly 162, the second flowmeter assembly 172 can include a second (e.g., manual) valve 174 and a second rotameter 176. However, the second flowmeter assembly 172 can also include other valves and flowmeters known in the art. The recycle line can include a tie-in or injection point 178 downstream of the second flowmeter assembly 172. The tie-in 178 can fluidly connect the recycle line 171 to the feed water line 121. Thus, a portion of the rejected water from the reject line 151 can be fed back into the feed water line 121.

As shown, the tie-in 178 is positioned downstream of the block valve 122 and upstream of the pressure sensor 124 in the feed water line 121. However, it is to be understood that the tie-in 178 can be positioned anywhere on the feed water line 121. By returning some of the reject water to the feed water line 121 via the recycle line 171, less fresh make-up water can be needed, thus reducing water costs. Further, cleaning and disposal costs can be reduced because less reject water is sent to waste through the waste line 161.

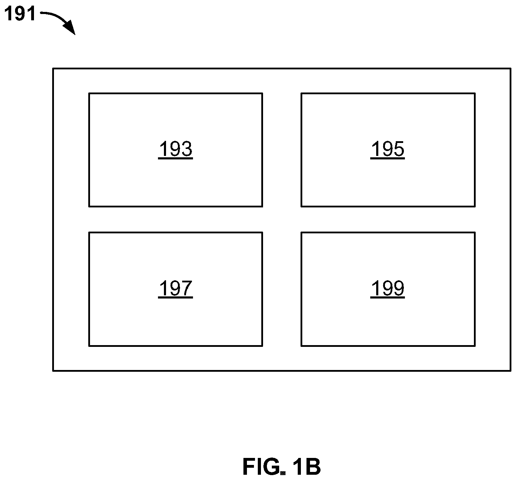

The reject line 151 can further include a second pressure transducer 152. The second pressure transducer 152 can be in electrical communication with a controller 191 (shown in FIG. 1B) and/or the server 190. Information from the second pressure transducer 152 can be used to determine how much reject water to send to the waste line 161 and/or the recycle line 171.

Referring back to the bypass line 131, the bypass line 131 can be in fluid communication with the pre-filter 116. As shown, the bypass line 131 can tie into the make-up water line 110 upstream of the feed water line 121. The bypass line 131 can include a block valve 132 for controlling the flow of the pre-filtered water through the bypass line 131. As discussed in more detail below, the block valve 132 can be closed in a first configuration and opened in a second configuration. In one embodiment, the first configuration is a default configuration. When block valve 132 is in the first configuration, all of the flow through the make-up water line 110 is directed to the nano-filtration system 120. Alternatively, in the second configuration, when block valve 132 is open, some or all of the flow from the make-up water line 110 can be directed through the bypass line 131.

An outlet 134 of the bypass line 131 can be in fluid communication with downstream equipment. In some instances, the outlet 134 can be in fluid communication with the heat rejection system 102 to provide, for example, make-up water to the heat rejection system. In other instances, the outlet 134 can be in fluid communication with a storage tank 140. The storage tank 140 can be designed to contain a volume of water filtered by the nano-filtration system 120. In some instances, the storage tank 140 can be in fluid communication with the heat rejection 102 system. Thus, the storage tank 140 can help absorb fluctuations in filtered water production and/or filtered water consumption. For instance, the storage tank 140 can serve as a reservoir if the nano-filtration system 120 produces more filtered water than is needed for the heat rejection system 102. Likewise, the storage tank 140 can be beneficial during times when the heat rejection system 102 needs more filtered water than can be produced from the nano-filtration system 120 or system 100. Moreover, the storage tank 140 may store a surplus supply of filtered water in cases of component or equipment malfunctions and/or system maintenance that can interrupt the production of filtered water. As such, the storage tank 140 can reduce the downtime of system 100 due to a lack of a filtered water supply.

Continuing with the bypass line 131, the bypass line 131 can also be in fluid communication with a product water line or permeate water line 181. The product water line 181 can be designed to transport the purified water from the nano-filtration system 120 to the heat rejection system 102 downstream of the system 100. As shown, the product water line 181 can include a third rotameter 182 and a check valve 184 positioned upstream of the tie-in to the bypass line 131. However, it is to be understood that the product water line 181 can include any type of flowmeter and valve known in the art, depending on the embodiment.

In some instances, the product water line 181 is separate from the bypass line 131 (i.e., is not in fluid communication with the bypass line 131) and can instead be fluidly coupled to the downstream heat rejection system 102 through a separate line that is in fluid communication with the water that has been at least partially purified by the nano-filtration system 120. Each of the bypass line 131 and the product water line 181 can include a fourth c cell 136 and a fifth c cell 186, respectively. The fourth c cell 136 and the fifth c cell 186 can be communicatively coupled to the controller (shown in FIG. 1B) and/or the server 190. The fourth c cell 136 and the fifth c cell 186 can transmit information such as flow data, pressure data, temperature data, and other process conditions to the server 190, which in turn can communicate the data to a database or display such as a distributed control system (DCS) or can send instructions to one or more components of the system 100.

Still referring to FIG. 1A, one or more of the components described above can be designed to communicate directly with one another or with the server 190 using a network 192. The controller 191 (shown in FIG. 1B) can be connected to or in communication with the network 192 via the first c cell 115, the second c cell 123, the third c cell 129, the fourth c cell 136, and/or the fifth c cell 186. As discussed in more detail below, the controller 191 can include a (e.g., local) controller designed to control one or more of the components of the system 100 and/or to receive and transmit data. Although FIG. 1A depicts one server 190 and one network 192, it should be noted that various communication processes and connections can be implemented to work in conjunction with, or independent from, one or more servers and/or networks associated with each of the components of the system 100 (i.e., pumps, valves, sensors, probes, etc.)

The network 192 can be provided in the form of a network interface, a local network, or other communication connection and is not limited to the plurality of communication connections (i.e., c cells 115, 123, 129, 136, and 186). One skilled in the art will recognize that a communication connection, for example, but not limited to the c cells 115, 123, 129, 136, and/or 186, can transmit and receive data using a plurality of communication protocols, including but not limited to: wired, wireless, Bluetooth, cellular, satellite, GPS, RS-485, RF, MODBUS, CAN, CANBUS, DeviceNet, ControlNet, Ethernet TCP/IP, RS-232, Universal Serial Bus (USB), Firewire, Thread, proprietary protocol(s), or other known communication protocol(s) as applicable.

In some embodiments, the network 192 is located proximate to one or more components of the system 100. The network 192 can include the Internet, intranets, extranets, wide area networks ("WANs"), local area networks ("LANs"), wired networks, wireless networks, cloud networks, or other suitable networks, or any combination of two or more networks, Ethernet networks, and other types of networks.

As described in more detail in connection to FIG. 1B, the server 190 can include the controller 191 for monitoring and/or controlling one or more components of the connected system 100. As shown in FIG. 1B, the controller 191 can be a data-processing device designed to transmit and receive data from the system 100.

For example, the first c cell can transmit data relating to a flow rate measured by the water totalizer 113 to the server 190 over the network 192. The controller 191 of the server 190 can receive the information at a receiver 193. A processor 195 can analyze the data and determine instructions to be sent back to the system 100. For example, the transmitted flow rate data can indicate that the make-up water line 110 has a high flow rate. Based on the flow rate data, the controller 191 can determine how much of the incoming water source should be directed to the nano-filtration system 120 and/or the bypass line 131. In the present example, where the make-up water line 110 has a high flow rate, the processor 195 can determine that the bypass line 131 should be opened so that the nano-filtration system 120 is not overloaded. The processor 195 can send the instructions to a transmitter 197, which can communicate the instructions to the system 100. For example, the transmitter 197 can send instructions to the system 100 to open the block valve 132 of the bypass line 131.

The controller 191 can further include a memory 199. The memory 199 can be designed to store data received from the system 100. The memory 199 can be implemented as a stand-alone memory unit and/or as part of the processor 195. Further, in one non-limiting example, the network 192 of FIG. 1A can be coupled to the memory 199, which can include program instructions that are stored in the memory 199 and executable by the processor 195 to perform one or more of the methods described herein.

Turning to FIGS. 2A-2C, several arrangements of a nano-filtration system are shown. FIGS. 2A-2C each illustrates a nano-filtration system (e.g., module or unit) 200a-200c, respectively, including a different number of filtration cartridges. Each of the nano-filtration systems 200a-200c includes similar components. Further, the system 100 of FIG. 1A can include any of the nano-filtration systems 200a-200c of FIGS. 2A-2C. The nano-filtration systems 200a-200c can include various types of membranes and membrane structures. For example, conventional nano-filtration systems are defined by membranes with a pore size range of about 0.1 nanometers (nm) to about 10 nm. Further, the nano-filtration system can be designed as spiral membranes and/or tubular/straw membranes. The embodiments described herein can use any combination of the above-described membranes or other suitable membranes.

Referring first to FIG. 2A, a two-cartridge nano-filtration system 200a is shown. The two-cartridge nano-filtration system 200a includes a first cartridge 210, and a second cartridge 212. A feed solution, such as the feed water line 121 of FIG. 1A, enters the first cartridge 210 through a feed flow line 220a. Permeate from the first cartridge 210 enters the second cartridge 212 through a first permeate feed line 230a (i.e., the permeate from the first cartridge 210 is the feed solution for the second cartridge 212). Permeate from the second cartridge 212 exits the two-cartridge nano-filtration system 200a through a first product line or permeate line 250a. The first product line 250a can be the product water line 181 of FIG. 1A. Concentrate from both the first cartridge 210 and the second cartridge 212 is removed from the two-cartridge nano-filtration system 200a through a first concentrate waste line 240a. The first concentrate waste line 240a can be the reject line 151 of FIG. 1A.

Similarly, in FIG. 2B, a three-cartridge nano-filtration system 200b is shown. The three-cartridge nano-filtration system 200b is similar to the two-cartridge nano-filtration system 200a. However, as shown in FIG. 2B, permeate from the second cartridge 212 is fed into a third cartridge 214 through a second permeate feed line 230b. The permeate from the third cartridge 214 exits the three-cartridge nano-filtration system 200b through a second permeate line or product line 250b. The second product line 250b can be the product water line 181 of FIG. 1A. Concentrate from the first cartridge 210, the second cartridge 212, and the third cartridge 214 is removed from the three-cartridge nano-filtration system 200b through a second concentrate waste line 240b. The second concentrate waste line 240b can be the reject line 151 of FIG. 1A.

In yet another instance, FIG. 2C illustrates a four-cartridge nano-filtration system 200c. The four-cartridge nano-filtration system 200c is similar to the three-cartridge nano-filtration system 200b. However, as shown in FIG. 2C, permeate from the third cartridge 214 is fed into a fourth cartridge 216 through a third permeate feed line 230c. The permeate from the fourth cartridge 216 exits the four-cartridge nano-filtration system 200c through a third product line or permeate line 250c. The third product line 250c can be the product water line 181 of FIG. 1A. Concentrate from the first cartridge 210, the second cartridge 212, the third cartridge 214, and the fourth cartridge 216 is removed from the four-cartridge nano-filtration system 200c through a third concentrate waste line 240c. The third concentrate waste line 240c can be the reject line 151 of FIG. 1A.

It is to be understood that the above exemplary embodiments are not to be considered limiting. Other nano-filtration system arrangements can be contemplated. In some embodiments, multi-stage nano-filtration systems can be arranged in various arrays. For example, in one non-limiting embodiment, the permeate from a first nano-filtration system can be fed into two or more nano-filtration systems downstream of the first nano-filtration system.

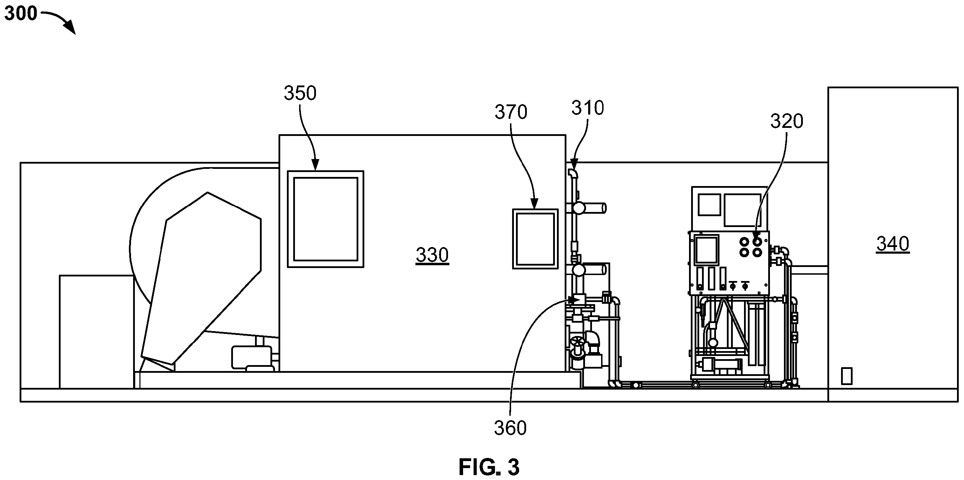

Turning to FIGS. 3-5, various views of a pre-treatment make-up water system 300, including a nano-filtration system, are shown. The system 300 is similar to the system 100 of FIG. 1A. However, the system 300 can include more or fewer components than the system 100 of FIG. 1A.

As shown, the system 300 includes a make-up water line 310 in fluid communication with a nano-filtration system 320. The nano-filtration system 320 is in fluid communication with a heat rejection system 330. The heat rejection system 330 can be the heat rejection system 102 of FIG. 1A. As shown, the heat rejection system 330 is an evaporative condenser. However, in other instances, the heat rejection system 330 can be a cooling tower, a fluid cooler, an adiabatic cooler, or any other heat rejection system known in the art. The make-up water line 310 and the nano-filtration system 320 can be the make-up water line 110 and the nano-filtration system 120 of FIG. 1A, respectively.

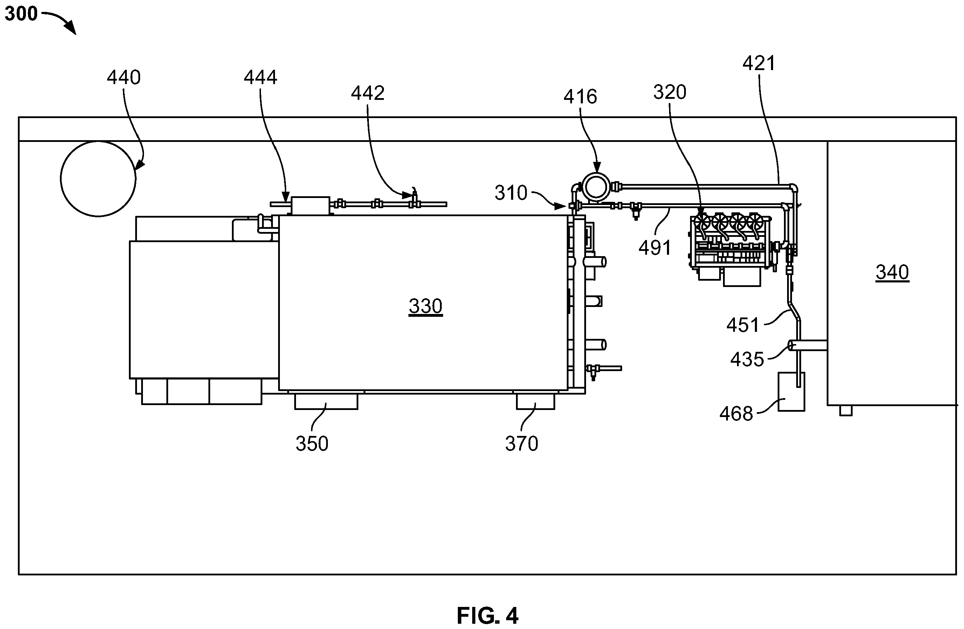

As shown, the system 300 can include a compressor 340 in fluid communication with the heat rejection system 330. The compressor 340 is positioned upstream of the heat rejection system 330 and can be designed to compress vapor used in the heat rejection system 330. The heat rejection system 330 can be in fluid communication with the compressor 340 via a piping 435 (shown in FIG. 4). However, it is to be understood that the compressor 340 can include one or more components not shown.

Referring specifically to FIG. 3, the heat rejection system 330 can include a first control panel 350. The first control panel 350 can include an electrical control system for monitoring and controlling one or more components of the heat rejection system 330. As shown in one embodiment, the first control panel 350 can be provided as a local control panel located on the heat rejection system 330. In another embodiment, the first control panel 350 can be provided as a remote control panel (e.g., wirelessly connected to the heat rejection system 330).

The system 300 can include one or more probes and sensors, such as an electronic water level sensor 360. The water level sensor 360 can include a water totalizer or other known type of flow meters in the art. The water level sensor 360 is designed to monitor a water level in the heat rejection system 330. The one or more probes and sensors, including the water level sensor 360 can be communicatively coupled to a control system, such as the controller 191. A second control panel 370 can be used to monitor and control the one or more probes and sensors. As shown in one instance, the second control panel 370 is a local control panel located on the heat rejection system 330. However, in other instances, the second control panel 370 can be a remote control panel (e.g., wirelessly connected to the heat rejection system 330).

Turning to FIG. 4, FIG. 4 is a top plan view of the system 300 of FIG. 3. As shown in FIG. 4, the system 300 can include a pre-filter 416 downstream of the make-up water line 310. The pre-filter 416 is in fluid communication with the nano-filtration system 320 and delivers pre-filtered water to the nano-filtration system 320 through a feed water line 421. In some embodiments, the pre-filter 416 can be a second pre-filter, such as a sediment filter, separate from the pre-filter 116 of FIG. 1A. Thus, in some instances, the feed water line 421 can be the make-up water line 110 of FIG. 1A. Product water or permeate water from the nano-filtration system 320 is delivered to the heat rejection system 330 through a product water line or permeate water line 491. The product water line 491 can be the outlet 134 of FIG. 1A. Reject water from the nano-filtration system 320 can be removed from the system 300 through a reject water line 451. The reject water line 451 can be the waste line 161 of FIG. 1A. As shown, the reject water line 451 can be in fluid communication with a drain 468. The drain 468 can be the reject outlet 168 of FIG. 1A.

The system 300 can further include one or more components for treating the filtered water after the filtered water is delivered to the heat rejection system 330. As shown in FIG. 4, the system 300 includes a water treatment chemistry tank 440 for holding one or more water treatment chemistries, a conductivity probe 442 for measuring the conductivity of the water in the heat rejection system 330, and a third control panel 444 for monitoring the water quality in the heat rejection system 330 and controlling one or more components of the heat rejection apparatus.

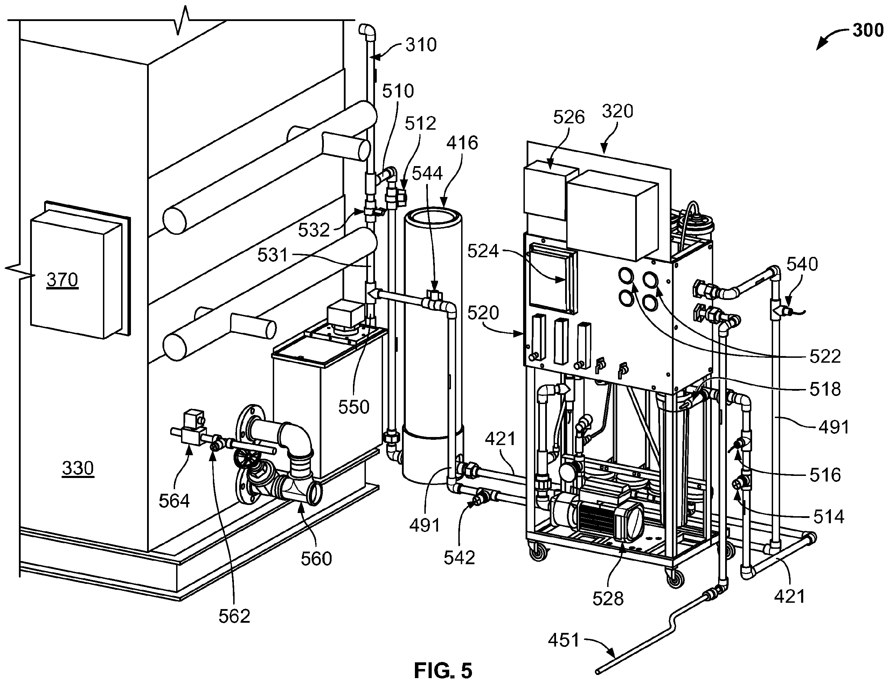

Referring specifically to FIG. 5, a portion of the system 300, focusing on the pre-filter 416 and the nano-filtration system 320, is illustrated. As shown, the make-up water line 310 delivers un-treated water to the pre-filter 416 through a pre-filter make-up water line 510. The pre-filter make-up water line 510 can include a valve for controlling the flow of the make-up water to the pre-filter 416. The valve 512 can be provided in the form of a block valve for isolating the pre-filter 416 and the nano-filtration system 320 from the rest of the system 300. In addition, or alternatively, the make-up water can be provided to the heat rejection system 330 through a bypass line 531. In some embodiments, the bypass line 531 can be a second bypass line separate from the bypass line 131 of FIG. 1A.

The pre-filtered water is delivered to the nano-filtration system 320 through the feed water line 421. The feed water line 421 can include one or more probes or sensors to monitor the water quality of the pre-filtered water entering the nano-filtration system 320. As shown, the feed water line 421 includes a first water totalizer 514 for measuring a flow rate and/or volume of the pre-filtered water entering the nano-filtration system 320, a first conductivity probe 516, and an oxidation-reduction potential (ORP) probe 518.

The nano-filtration system 320 can include various components to monitor and control the operation of the nano-filtration system 320. As shown, the nano-filtration system 320 includes one or more flow sensors 520, one or more gauges 522, a local control box 524, a remote control box 526, and/or a pump 528. The one or more flow sensors 520 can be provided in the form of a float sensor. The one or more gauges 522 can display a local reading for pressure, temperature, conductivity, flow rate, and other known operating parameters. In some instances, the local control box 524 can be provided in the form of a local display. In some instances, the local control box 524 can include controls for adjusting one or more operating conditions of the nano-filtration system 320, such as the flow rate. The remote control box 526 can be communicatively coupled to a server. The pump 528 can be the pump 126 of FIG. 1A and can be used to boost a flow rate and pressure of the pre-filtered water entering the nano-filtration system 320.

As discussed above, the contaminants removed by the nano-filtration system 320 are removed through a reject water line 451. In some embodiments, the system 300 can further include one or more components for treating the reject water removed through the reject water line 451. The product water or permeate water from the nano-filtration system is delivered to the heat rejection system 330 through the product water line 491. The product water line 491 can be the outlet 134 of the system 100 of FIG. 1A. As shown, the product water line 491 includes a second conductivity probe 540, a second water totalizer 542, and a valve 544. The valve 544 can be provided in the form of a block valve. When closed, the valve 544 can isolate the nano-filtration system 320 from an outlet line or outlet permeate line 550.

Referring back to the make-up water line 310, as shown, the make-up water line 310 can include a bypass line 531. The bypass line 531 includes a valve 532 for controlling the make-up water flow through the bypass line 531. As shown, a take-off point for the bypass line 531 is upstream of the pre-filter 416. However, in some embodiments, the take-off point for the bypass line 531 can be located downstream of the pre-filter 416 and upstream of the nano-filtration system 320. The product water line 491 can tie into the bypass line 531 upstream of the outlet line 550. Thus, the outlet line 550 can deliver make-up water and filtered water that has passed through the pre-filter 416 and the nano-filtration system 320 to the heat rejection system 330.

In addition to the components discussed in FIGS. 3 and 4, the heat rejection system 330 can further include an overflow line 560 for draining water from the heat rejection system 330, a third water totalizer 562, and a valve 564 for controlling the flow of water to the third water totalizer 562. The valve 564 can be provided in the form of a block valve and can be communicatively coupled to the conductivity probe 442 (i.e., the valve 564 can be controlled off of the measured conductivity of the water in the heat rejection system 330).

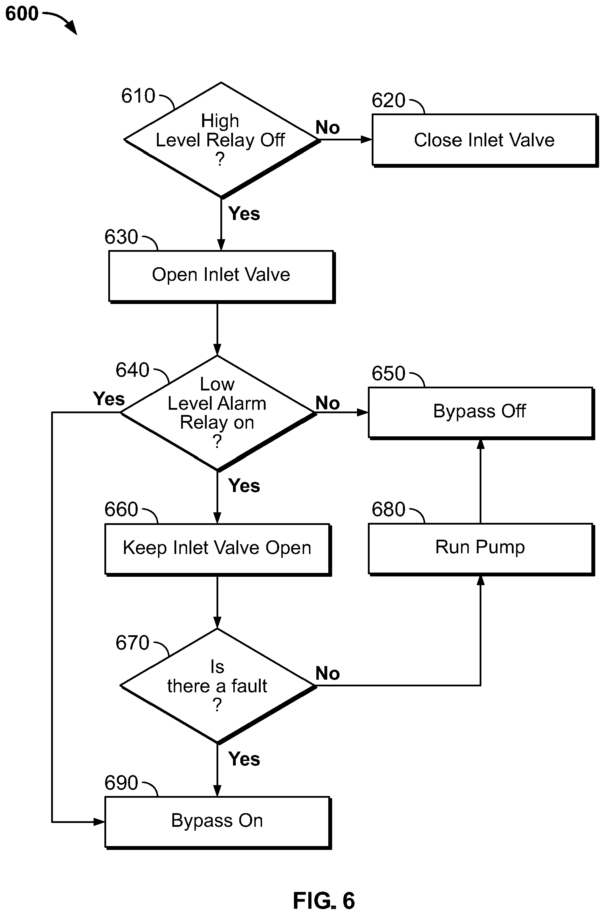

Turning to FIG. 6, a method 600 of operation for a heat rejection system, including a bypass, specifically, a method for operating the bypass line 131 of the system 100 of FIG. 1A and/or the system 300 of FIGS. 3-5, is shown.

At step 610, a controller can be designed to perform a check to determine if there is a high water level in the heat rejection system. The controller can be the controller 191 of FIG. 1B. The heat rejection system can be the heat rejection system 102 of FIG. 1A or the heat rejection system 330 of FIGS. 3-5. A high water level can be detected if a high water level relay or trigger is activated. If the controller 191 determines a high water level relay is on (e.g., the high water level relay is not off), then the method can proceed to step 620 to stop the flow of inlet water to the system.

In some instances, at step 620, an inlet valve and a bypass valve of the system are already closed. Therefore, the make-up water and/or the bypass valve can stay closed. However, in other instances, a make-up water valve and/or a bypass valve can be opened. The make-up valve can be the block valve 122, designed to control the flow of the pre-filtered water through the feed water line 121 to the nano-filtration system 120. The bypass valve can be the block valve 132, designed to control the flow of the pre-filtered water through the bypass line 131. Thus, once the high level relay is detected, the controller 191 can be designed to close at least one of the make-up water valve and/or the bypass valve.

However, if at step 610, the controller 191 determines the high water level alarm is not activated (i.e., the high water level relay is off), the inlet make-up water valve and/or the bypass valve can be opened at step 630.

Following step 630, at step 640, the controller 191 can be designed to perform a check to determine if there is a low water level in the heat rejection system. A low water level can be detected if a low water level relay or trigger is activated. If the controller 191 determines that there is not a low water level (i.e., the low level relay is off), then the method can proceed to step 650. At step 650, the inlet make-up water valve and/or the bypass valves can be closed. In some instances, at step 650, the make-up water valve can be kept open, and the bypass valve can be closed.

However, if the controller 191 determines that there is a low water level, then the method can proceed to step 660. At step 660, the inlet make-up valve can be kept open. The inlet make-up water can be the filtered water from the product water line 181 of FIG. 1A (e.g., the filtered product water from the nano-filtration system 120 of FIG. 1A).

The high and low water levels can be pre-determined thresholds based on the size of the heat rejection system, the cooling required, the flow rate of water through the system, etc. The high and low level alarms can be triggered by a height of water in a basin in the heat rejection system. One or more probes can be used to detect the height of water in the basin. The one or more probes can be provided in the form of a hanging level sensor, a float sensor, an optical water level sensor, a capacitance liquid level sensor, a diaphragm liquid level sensor, an ultrasonic liquid level sensor, and a radar level gauge. In some instances, a first level sensor is designed to detect a high water level in the basin, and a second level sensor is designed to detect a low water level in the basin. Each of the one or more sensors can be calibrated to a manufacturer's requirements for the specific heat rejection system or can be adjustable/customizable to the system. Each of the one or more sensors can be electrically and/or communicatively coupled to the controller 191.

At step 670, the controller 191 can be designed to determine if there is a fault in the supply of the make-up water. If no fault is detected, a pump is turned on to supply the make-up water to the heat rejection system at step 680. The method 600 then returns to step 650, where the bypass can remain closed. However, if at step 670, a fault is detected, the bypass can be opened at step 690.

In some instances, a fault in the make-up water supply can be detected when a flow rate of the make-up water (e.g., the product water or permeate water from the nano-filtration system) falls below a first minimum threshold. The threshold can be a pre-determined flow rate. Thus, a low level alarm can be triggered when the flow rate falls below the threshold. In some embodiments, a fault in the make-up water supply is detected when a pressure of the make-up water (i.e., the product water or permeate water from the nano-filtration system) falls below a second minimum threshold. Thus, if a fault is detected, it can be an indication that the nano-filtration system is fouled. The bypass can be opened to compensate for the reduced flow rate from the outlet of the nano-filtration system or as an alternative make-up water source.

Referring back to step 640, in some instances, if a low water level is detected, the controller 191 can be designed to open the bypass. This can ensure that any reduction or loss of a make-up water supply from the nano-filtration system does not disrupt the supply of make-up water to the heat exchange system. A benefit of opening the bypass is that although the unfiltered make-up water can have more contaminants, the heat rejection system can have a continuous supply of make-up water. Moreover, the heat rejection system can be optimized to run with a certain percentage of make-up water from the bypass to reduce the load on the nano-filtration system, thereby extending the life of the nano-filtration system.

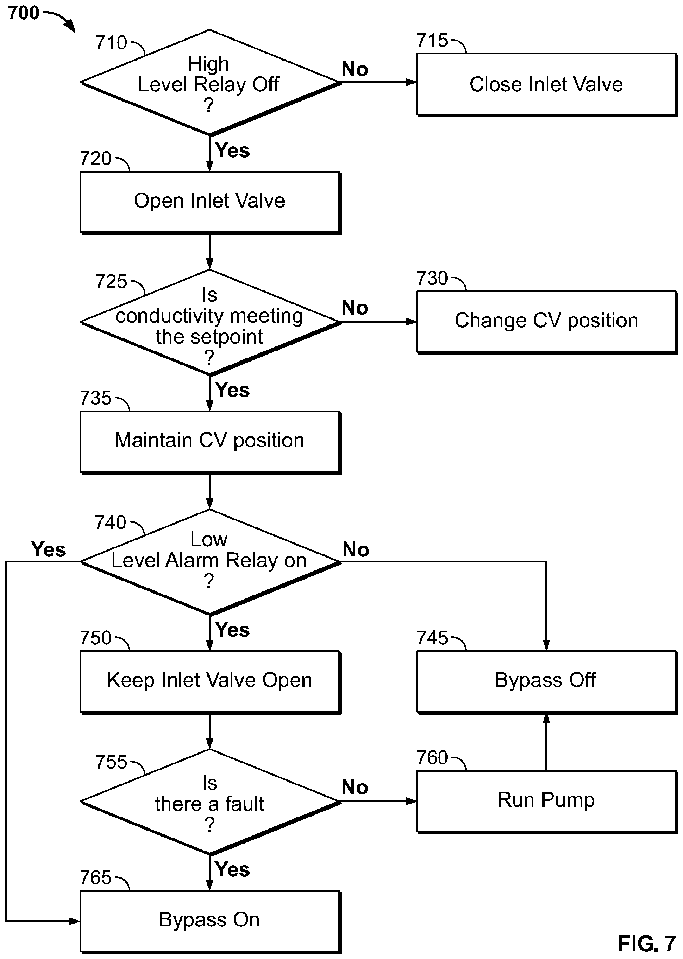

FIG. 7 illustrates a method 700 for operating a heat rejection system using a blended supply of filtered water from the nano-filtration system and unfiltered make-up water. The method 700 is similar to the method 600 of FIG. 6. However, when water is being fed to the heat rejection system, a valve for both the filtered product water from the nano-filtration system 120 and unfiltered water from the inlet make-up water line 110 of FIG. 1 can be opened.

Accordingly, at step 710, the controller 191 can be designed to perform a check to determine if there is a high water level in the heat rejection system. If the controller 191 determines a high water level relay is on (e.g., the high water level relay is not off), then the method can proceed to step 715 to stop the flow of inlet water to the system.

In some instances, at step 715, an inlet valve and a bypass valve of the system are already closed. Therefore, the make-up water and/or the bypass valve can stay closed. However, in other instances, a make-up water valve and/or a bypass valve can be opened. The make-up valve can be the block valve 122, designed to control the flow of the pre-filtered water through the feed water line 121 to the nano-filtration system 120. The bypass valve can be a block valve 132, which is designed to control the flow of the pre-filtered water through the bypass line 131. Thus, once the high level relay is detected, the controller 191 can be designed to close one or more of the make-up water valve and the bypass valve.

However, if at step 710, the controller 191 determines the high water level alarm is not activated (i.e., the high water level relay is off), the inlet make-up water valve and/or the bypass valve can be opened at step 720. One or more parameters of the make-up water stream being fed to the heat rejection system (e.g., when multiple water sources are blended) may be monitored. One or more of these monitored parameters may be used to determine a percentage of each stream in the blended stream. For instance, unfiltered or pre-filtered water, such as the water in the bypass line 131 can have a higher conductivity than the filtered water from the product water line 181. Thus, the system may control or monitor the percentage of unfiltered or pre-filtered water in the blended water to maintain a pre-determined or desired COC in the heat rejection system.

Accordingly, at step 725, the controller 191 can be designed to determine one or more parameters of the blended water. In some instances, the determined parameter is conductivity. In some instances, the controller 191 can determine the conductivity based on the conductivity sensed by one or more of the conductivity probes 442 and 516 of FIGS. 4 and 5, respectively. If the controller determines that the conductivity in the blended water is outside (e.g., not within) a target setpoint, then the method can proceed to step 730. The target setpoint can be a pre-determined value and/or a range of values.

At step 730, the controller 191 can be designed to change a position of a control valve (CV) (e.g., the make-up water valve and/or the bypass valve). For instance, if the controller 191 determines that the conductivity of the blended water is higher than the setpoint, the controller 191 can be designed to limit the amount of unfiltered or pre-filtered make-up water in the blended water by closing or partially closing the make-up water valve. Conversely, if the controller 191 determines that the conductivity of the blended water is lower than the setpoint, the controller 191 can be designed to increase the amount of unfiltered or pre-filtered make-up water in the blended water by opening (e.g., or increasing the open position) of the make-up water valve. A benefit of adding more unfiltered or pre-filtered make-up water to the blended water is that the overall costs for operating the system may be decreased. Further, the life of the nano-filtration system may be increased because the membranes may not become exhausted as quickly.

However, if at step 725, the controller 191 determines the one or more parameters of the blended water are meeting the setpoint, then the method proceeds to step 735. At step 735, the controller 191 can be designed to maintain the valve positions of the make-up water valve and/or the bypass valve.

At step 740, the controller 191 can be designed to perform a check to determine if there is a low water level in the heat rejection system. A low water level can be detected if a low water level relay or trigger is activated. If the controller 191 determines that there is not a low water level (i.e., the low level relay is off), then the method can proceed to step 745. At step 745, the inlet make-up water valve and/or the bypass valves can be closed. In some instances, at step 745, the make-up water valve can remain (e.g., be kept) open, and the bypass valve can be closed.

However, if the controller 191 determines that there is a low water level, then the method 700 can proceed to step 750. At step 750, the inlet make-up valve and/or the bypass valve can be kept open.

At step 755, the controller 191 can be designed to determine if there is a fault in the supply of the make-up water. If no fault is detected, a pump is turned on to supply the make-up water to the heat rejection system at step 760. The method then returns to step 745, where the bypass can remain closed. However, if a fault is detected at step 755, the position of the bypass valve can be adjusted. In some instances, the bypass valve is opened at step 765. In other instances, where the bypass valve is already open, the controller can be designed to increase the flow of the unfiltered or pre-filtered water through the bypass line.

Additionally, referring back to step 740, in some instances, if a low water level is detected, the controller 191 can be designed to open the bypass valve and/or increase the flow of the unfiltered water or pre-filtered water through the bypass line. This can ensure that any reduction or loss of a make-up water supply from the nano-filtration system does not disrupt the supply of make-up water to the heat exchange system. However, there may be some instances where the supply of water from the nano-filtration system is disrupted. For example, equipment can malfunction, or the system can be down for maintenance. Thus, it can be beneficial to have a storage supply or reservoir of filtered product water from the nano-filtration system that can be used when the system is down.

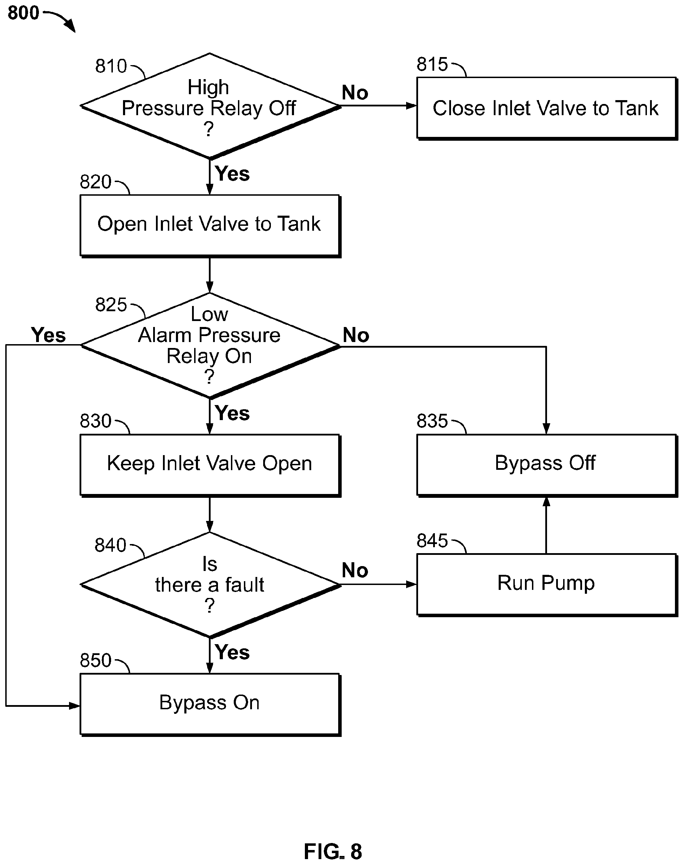

Accordingly, FIG. 8 illustrates a method 800 for supplying make-up water from a reservoir or storage tank to a heat rejection system. Similar to the methods 600 and 700, the method 800 can be implemented in the systems 100 of FIG. 1A and/or the system 300 of FIGS. 3-5. Thus, the reservoir tank can be the storage tank 140 of FIG. 1A.

The method 800 is similar to the method 600 of FIG. 6. However, the method 800 focuses on controlling the supply of water to the storage tank instead of a heat rejection system. Thus, at step 810, a controller may be the controller 191 of FIG. 1B and the controller can be designed to perform a check to determine if there is a high pressure in the storage tank 140. Accordingly, the storage tank 140 can include a pressure sensor designed to sense a pressure in the storage tank 140. The pressure in the storage tank 140 can be used to determine an approximate level in the storage tank 140. However, it is to be understood that other sensors, such as level sensors, can be used to sense the level in the storage tank 140. If the controller 191 determines a high pressure relay is on (e.g., the high pressure relay is not off), then the method can proceed to step 815 to stop the flow of inlet water to the storage tank 140. In some instances, the storage tank 140 can receive water from the product water line 181 and/or the bypass line 131. Thus, the controller 191 can be designed to close the check valve 184 and/or the block valve 132.

However, if at step 810, the controller 191 determines the high pressure relay is not activated (i.e., the high pressure relay is off), the inlet make-up water valve and/or the bypass valve can be opened at step 820. Thus, the controller 191 can be designed to open the check valve 184 and/or the block valve 132.

Following step 820, at step 825, the controller 191 can be designed to perform a check to determine if there is a low water level in the heat rejection system. A low water level can be detected if a low pressure relay or trigger is activated. If the controller 191 determines there is not a low water level (i.e., the low pressure relay is off), then the method can proceed to step 835. At step 835, the product water valve (e.g., the check valve 184) and/or the bypass valve (e.g., 132) can be closed. In some instances, at step 835, the product water valve can be kept open, and the bypass valve can be closed. However, if the controller 191 determines there is a low water level, then the method can proceed to step 830. At step 830, the product water valve can be kept open.

The high pressure relay and the low pressure relay can be pre-determined thresholds based on the size of the storage tank 140, the cooling required for the system, the flow rate of water through the system, and/or the like.

At step 840, the controller 191 can be designed to determine if there is a fault in the supply of the product water and/or the bypass water to the storage tank 140. If no fault is detected, a pump is turned on to supply the product water and/or the bypass water at step 845. The method 800 then returns to step 835, where the bypass can remain closed. However, if at step 840, a fault is detected, the bypass can be opened at step 850.

In some instances, a fault in the water supply to the storage tank 140 can be detected when a flow rate of the water to the storage tank (e.g., the product water from the nano-filtration system 120 and/or the unfiltered or pre-filtered water in the bypass line 131) falls below a first minimum threshold. The threshold can be a pre-determined flow rate. Thus, a low flow alarm can be triggered when the flow rate falls below the threshold. In some instances, a fault in the water supply is detected when a pressure of the make-up water (i.e., the product water from the nano-filtration system) falls below a second minimum threshold. Thus, if a fault is detected, it can be an indication that the nano-filtration system is fouled. The bypass can be opened to compensate for the reduced flow rate from the outlet of the nano-filtration system, or as an alternative make-up water source.

Referring back to step 825, in some instances, if a low pressure is detected, the controller 191 can be designed to open the bypass valve. This can ensure that any reduction or loss of a make-up water supply from the nano-filtration system 120 does not disrupt the supply of make-up water to the storage tank 140. However, as mentioned above, it can be beneficial to provide a blended supply of water (e.g., filtered and unfiltered or pre-filtered water) to the storage tank 140 because it can reduce costs. Thus, the method 800 can be combined with the methods 600 and/or 700 of FIGS. 6 and 7, respectively.

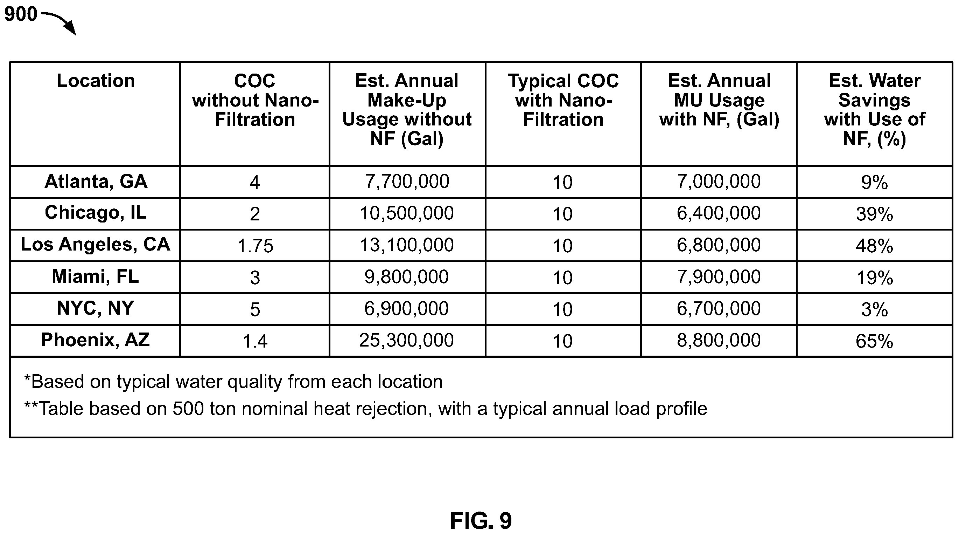

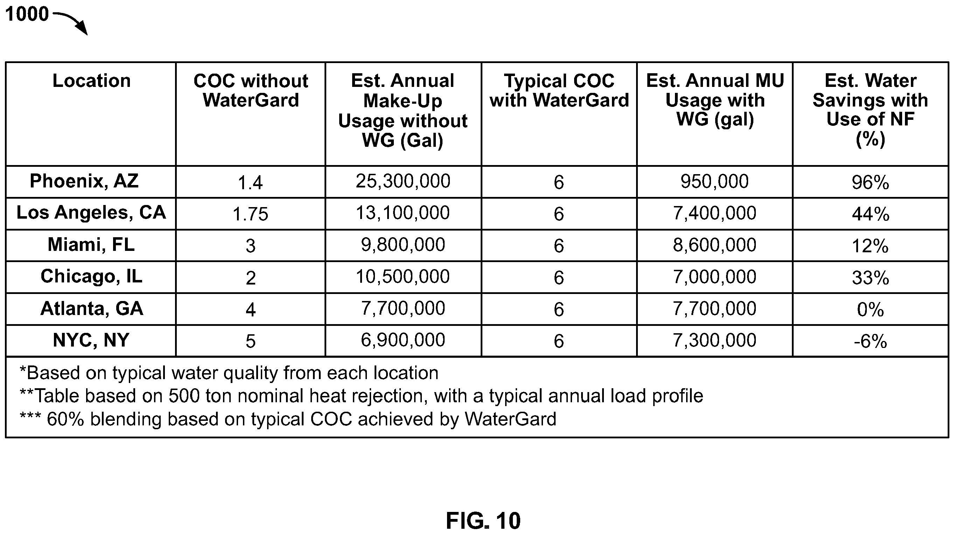

Turning to FIGS. 9 and 10, several tables showing the water savings achieved using the systems and methods discussed herein are illustrated. Each of the tables comprises data for a heat rejection system, including a nano-filtration system operated in six different environments - Atlanta, GA; Chicago, IL; Miami, FL; Phoenix, AZ; Los Angeles, CA; and New York City, NY.

In each of the six different environments, heat rejection systems having a 500 ton nominal heat rejection and typical load profile for the region were tested. Further, each of the six different environments has different water and sewer costs. Moreover, the estimated make-up water usage varies between the six different environments due to different regional environmental conditions like temperature and humidity. Thus, each of the six different environments has different operational costs. The operational cost includes water and sewer, nano-filtration system maintenance, and water treatment costs (i.e., chemical usage in the heat rejection system).

Referring first to FIG. 9, the water savings for operating a heat rejection system, including a nano-filtration system, is shown. By comparing the values in Table 900, it can be seen that heat rejection systems, including a nano-filtration system, can reduce annual make-up water usage by about 3% to about 65% as compared to heat rejection systems without a nano-filtration system. As discussed above, this can be because the nano-filtration system removes contaminants in the make-up water supplied to the heat rejection system, thereby decreasing the overall water consumption and increasing the COC in the heat rejection system.

FIG. 10 illustrates the water savings for a heat rejection system including a nano-filtration system that includes a blended stream (e.g., a system operated according to the method disclosed in method 700 of FIG. 7). The heat rejection systems tested in Table 1000 included a blended stream comprised of approximately 60% filter water (e.g., product water from the nano-filtration system) and approximately 40% unfiltered or pre-filtered water. By comparing the data in Table 1000, it can be seen that heat rejection systems including a nano-filtration system can reduce annual make-up water usage by up to approximately 96% even when unfiltered or pre-filtered water is blended into the make-up water. Moreover, as discussed herein, using a blended stream can also reduce the system costs because less make-up water may need to be filtered by the nano-filtration system thereby saving on operating and maintenance costs.

Accordingly, the systems and methods described herein, illustrate the benefits of using a nano-filtration system to filter at least a portion of the make-up water supplied to a heat rejection system. It will be appreciated by those skilled in the art that while the invention has been described above in connection with particular embodiments and examples, the invention is not necessarily so limited, and that numerous other embodiments, examples, uses, modifications, and departures from the embodiments, examples and uses are intended to be encompassed by the claims attached hereto. The entire disclosure of each patent and publication cited herein is incorporated by reference as if each such patent or publication were individually incorporated by reference herein. Various features and advantages of the invention are set forth in the following claims.

## Claims

1. An automated pre-treatment make-up water system (100) comprising:
a make-up water line (110) for supplying an incoming water source to a pre-filter (116) designed to pre-filter the incoming water source, the make-up water line having a first control valve (122);
a nano-filtration system (120) designed to further filter the pre-filtered water, the nano-filtration system having a second control valve (128) and disposed downstream of the pre-filter;
a bypass line (131) for transporting at least a portion of the incoming water source to a heat rejection system (102), the bypass line having a third control valve (132) and being positioned upstream of the nano-filtration system and in fluid communication with the make-up water line, wherein the heat rejection system is designed to use water supplied from the bypass line and the nano-filtration system as coolant; and
a controller (191) in communication with the make-up water line (110), the nano-filtration system (120), and the bypass line (131) having:
a receiver (193) designed to receive at least one water quality parameter, a flow rate, or a pressure from at least one of the make-up water line, the nano-filtration system, or the bypass line;
a processor (195) designed to analyze the at least one water quality parameter; and
a transmitter (197) designed to transmit instructions based on the at least one water quality parameter to at least one of the first control valve, the second control valve, or the third control valve to control a supply flow rate of water supplied to the heat rejection system.

2. The automated pre-treatment make-up water system (100) of claim 1, wherein the pre-filter (116) is provided in the form of at least one of a membrane filter, a sand filter, a diatomaceous earth filter, or a cartridge filter.

3. The automated pre-treatment make-up water system of claim 1 or 2, wherein the controller (191) is designed to determine whether a first flow rate from the nano-filtration system is less than, equal to, or exceeds a minimum threshold flow rate value.

4. The automated pre-treatment make-up water system of claim 3, wherein the controller (191) is designed to open the third control valve (132) in response to the first flow rate being less than the minimum threshold flow rate value.

5. The automated pre-treatment make-up water system of claim 3, wherein the controller (191) is designed to open the second control valve (128) and the third control valve (132) when a low level relay of the heat rejection system (102) is tripped.

6. The automated pre-treatment make-up water system of any one of claims 1 to 5, wherein the controller (191) is designed to adjust a position of at least one of the second control valve (128) and the third control valve (132) in response to the at least one water quality parameter of the incoming water source being less than a threshold value.

7. The automated pre-treatment make-up water system of any one of claims 1 to 6, wherein a supply water source of the heat rejection system (102) is provided in the form of water from each of the bypass line and a permeate water line of the nano-filtration system (120).

8. The automated pre-treatment make-up water system of any one of claims 1 to 7, wherein a supply water source of the heat rejection system (102) is provided in the form of water from the bypass line.

9. The automated pre-treatment make-up water system of any one of claims 1 to 8, wherein each of the bypass line (131) and a permeate water line (181) of the nano-filtration system are fluidly coupled to a storage tank (140).

10. The automated pre-treatment make-up water system of claim 9, wherein a supply water source of the heat rejection system is provided in the form of water from the storage tank (140).

11. The automated pre-treatment make-up water system of any one of claims 1 to 10, wherein the heat rejection system (102) is provided in the form of at least one of a cooling tower, an evaporative cooler, an adiabatic cooler, or a fluid cooler.

12. A method for controlling a supply of pre-treated make-up water to a heat rejection system (102), the method comprising:
providing a pre-treatment make-up water system (100) having:
a make-up water line (110) with a first control valve (122) designed to control a first flow rate of an incoming water source;
a nano-filtration system (120) designed to filter the incoming water source and positioned downstream of and in fluid communication with the make-up water line;
an outlet permeate line (181) having a second control valve (128) designed to control a second flow rate of the filtered incoming water to the heat rejection system, the heat rejection system designed to use the filtered incoming water source as a coolant; and
a bypass line (131) having a third control valve (132) designed to control a third flow rate of the incoming water source to the heat rejection system;
determining a low water level in a basin of the heat rejection system;
opening the second control valve in response to the determined low water level;
determining the second flow rate is below a minimum threshold flow rate value; and
opening the third control valve in response to determining the second flow rate is below a minimum threshold.

13. The method for controlling the supply of pre-treated make-up water to a heat rejection system of claim 12, comprising:
determining a water quality parameter of the water in the basin of the heat rejection system;
determining the water quality parameter exceeds a water quality threshold value; and
adjusting a valve position of at least one of the second control valve and the third control valve in response to determining the water quality parameter exceeds the water quality threshold value.

14. The method for controlling the supply of pre-treated make-up water to a heat rejection system of claim 13, wherein the third control valve is closed in response to determining the water quality parameter exceeds the water quality threshold value.

15. The method for controlling the supply of pre-treated make-up water to a heat rejection system of claim 13, wherein adjusting the valve position of the third control valve includes partially closing the third control valve in response to determining the water quality parameter exceeds the water quality threshold value.
